# EUROPÄISCHE PATENTSCHRIFT

(11) **EP 1 009 946 B1**
(45) Veröffentlichungstag und Bekanntmachung des Hinweises auf die Patenterteilung: **13.03.2002**
(21) Anmeldenummer: 98948774.9
(22) Anmeldetag: 06.08.1998
(51) Int. Cl.: F16L 15/06

(54) **ROHRVERBINDER**
PIPE CONNECTOR
RACCORD POUR CANALISATIONS

(30) Priorität: 03.09.1997 DE 19739458
(43) Veröffentlichungstag der Anmeldung: 21.06.2000
(73) Patentinhaber: VALLOUREC MANNESMANN OIL & GAS GERMANY GMBH, 40472 Düsseldorf (DE)
(72) Erfinder: QUADFLIEG, Erich, D-47800 Krefeld (DE); KRUG, Gerhard, D-47259 Duisburg (DE); LENZE, Friedrich, D-40885 Ratingen (DE); SCHLÜTER, Martin, D-40227 Düsseldorf (DE)
(74) Vertreter: Meissner, Peter E., Dipl.-Ing.
(86) Internationale Anmeldenummer: DE9802318
(87) Internationale Veröffentlichungsnummer: WO9911963

(56) Entgegenhaltungen:
- WO-A-96/07044
- GB-A- 2 146 084

## Beschreibung

Die Erfindung betrifft einen Rohrverbinder gemäß dem Oberbegriff des Patentanspruches 1.

Rohrverbinder dienen zum Verbinden rohrförmiger Elemente, beispielsweise zu Rohrleitungen, die insbesondere unter Druck stehende Fluide, wie beispielsweise Gas oder Öl befördern. Bei der Suche nach Öl oder Gas werden diese Rohrverbinder auch in Futter- oder Förderrohrsträngen eingesetzt.

Die hier betrachteten Rohrverbindungen erfolgen üblicherweise mit Gewinden, einem Außengewinde auf einem Zapfenelement und einem Innengewinde in einem Muffenelement, die miteinander verschraubt werden. Bezüglich der nach dem Verschrauben eindeutigen Positionierung unterscheidet man Rohrverbinder mit einer aufgebrachten Markierung und solche, die ein zusätzliches Stoßelement als Innen- oder Außenschulter aufweisen. Dieses Schulterelement kann zusätzlich die Funktion einer Dichtung übernehmen. Die Schulter besteht im wesentlichen aus ringförmigen Flächen, die beispielsweise am freien Ende des Zapfenelementes und an der Innenseite des Muffenelementes angeordnet sind und durch das Zusammenschrauben fest aufeinandergepreßt werden. Bei einer Innenschulter wird das Zapfenelement zwischen der Schulter und dem Gewinde zusammengedrückt und das Muffenelement zwischen der Schulter und dem Gewinde gedehnt, bei einer Außenschulter wird das Zapfenelement zwischen der Schulter und Gewinde gedehnt und das Muffenende zwischen der Schulter und dem Gewinde zusammengedrückt. Die durch die Flächenpressung in der Schulter bewirkten Spannungen in Muffe und Zapfen werden überwiegend nur durch die wenigen letzten Gewindezähne des Gewindes, die benachbart zu den Schulterflächen liegen, aufgenommen. Die übrigen Gewindezähne sind nur äußerst gering belastet. Dementsprechend sind die belasteten Gewindezähne hoch beansprucht. Diese hohen Spannungen im Gewinde werden durch äußere Belastungen der Verbindungen, insbesondere durch axialen Zug bzw. Druck, aber auch durch Innen- und Außendruck sowie durch Biegung erhöht, so dass die Gesamtspannung einen Wert erreichen kann, der größer ist als die zulässige Streckgrenze. Axialer Zug kann die Vorspannung im Stoß und damit seine Wirkung die Positionierung und Dichtung aufheben, axialer Druck kann zur plastischen Verformung im Schulterbereich führen und bei nachfolgenden Zugbelastungen die Funktion der Positionierung und Dichtung unwirksam machen.

Um die auf die Abdichtflächen (Stoß) einwirkenden Kräfte als Reaktionskräfte auf eine möglichst große Anzahl von Gewindezähnen aufzuteilen, ist in der DE 34 31 808 A1 ein speziell ausgebildeter Rohrverbinder offenbart. Bei diesem Vorschlag weist der Rohrverbinder einen Zwischenabschnitt des Gewindes zwischen den Enden des Zapfen- und Muffengewindes auf, in dem beide Elemente die gleiche Steigung haben. In den Endenabschnitten sind die Steigungen zwischen Zapfen- und Muffengewinde verschieden, und zwar in Abhängigkeit von der Lage des Stoßes. Wenn die ringförmigen Abdichtflächen (Stoß) an der Rohrinnenseite liegen, dann weist das Gewinde des Zapfenelementes gegenüber dem Gewinde des Muffenelementes eine größere Steigung auf; wenn die Abdichtfläche an der Rohraußenseite liegt, ist es umgekehrt. Durch die vorgeschlagene Anordnung soll die vom Stoß herrührende Reaktionskraft gleichmäßig auf die Gewindezähne übertragen werden. Dabei werden jedoch Belastungen, wie axiale Kompression und Biegung, weiterhin zum großen Teil in den bereits durch die Verschraubung erheblich vorgespannten Stoß eingeleitet. Am Ende der Beschreibung wird in der genannten Schrift darauf hingewiesen, dass die zuvor erläuterte Konstruktion auch bei einem Rohrverbinder mit einem mehrgängigen Gewinde anwendbar ist.

In der WO 96/07044 ist ein Rohrverbinder offenbart, bei dem die Belastungen wie axiale Kompression und Biegung nicht mehr allein vom Stoß, sondern zum überwiegenden Teil vom Gewinde aufgenommen werden. Dazu weist ein Element, d. h. Zapfen oder Muffe, eine durchgehend konstante Steigung auf und das damit verschraubte Element ist mit zwei jeweils von den Enden der Gewindelänge sich erstreckenden Abschnitten versehen, die ebenfalls innerhalb des Abschnittes eine konstante Steigung aufweisen, die aber unterschiedlich ist zum erstgenannten Element.

Die genannten Abschnitte weisen in der Mitte einen Versatz zueinander auf, so dass im Übergangsbereich zwischen den Abschnitten ein sich in Kontakt befindlicher schmaler Zahn oder eine überbreite Lücke entsteht und die Zahnlücke außerhalb des Versatzes in einem Element um soviel breiter ist als der Zahn des anderen Elementes und dass an der einen Seite des Versatzes die Führungsflanke verspannt ist gegen die Lastflanke an der anderen Seite des Versatzes, wobei die maximale Verspannung in der Mitte des Gewindes erfolgt und zu den Rändern des Gewindes hin abnimmt. Diese Konstruktion hat zur Grundlage, dass durch eine Abweichung in der Steigung eine Verspannung der Lastflanke in einem Gewindebereich gegen die Führungsflanke im selben oder in einem anderen Bereich bewirkt.

Umfangreiche Versuche mit diesem Rohrverbinder haben gezeigt, dass der gewünschte Effekt der Verspannung der Last- gegen die Führungsflanke in ungünstigen Fällen unzureichend werden kann bei ungünstiger Paarung der bei der Fertigung der Gewinde sich ergebenden Abweichungen.

Aufgabe der Erfindung ist es, einen Rohrverbinder anzugeben, der einfach herstellbar ist und mit dem eine Lastaufnahme für alle äußeren Belastungen der Verbindung insbesondere Arbeitsdrehmomente, axiale Kompression und Biegung überwiegend über das Gewinde erreicht wird, auch unter Berücksichtigung der bei der Gewindeherstellung unvermeidbar sich ergebenden Abweichungen von der Idealgestalt, wobei die axiale Zug- und Innendruckbelastung nicht beeinträchtigt werden.

Diese Aufgabe wird ausgehend vom Oberbegriff in Verbindung mit den kennzeichnenden Merkmalen des Patentanspruches 1 gelöst. Vorteilhafte Ausgestaltungen sind Bestandteil von Unteransprüchen.

Beim erfindungsgemäß ausgebildeten Rohrverbinder, unabhängig davon, ob ein einoder mehrgängiges Gewinde vorliegt, weist in bekannter Weise ein Element, vorzugsweise das Zapfenelement, eine über die gesamte Gewindelänge konstante Steigung auf, bei mehrgängigem Gewinde gleiche konstante Steigung. Dies hat den großen Vorteil, dass mit relativ einfachen Mittein ein beschädigtes Zapfenelement nachgeschnitten werden kann. Das besonders gestaltete und mit großem technischen Aufwand hergestellte Muffenelement wird bei Beschädigung ausgetauscht. Vom Erfindungsgedanken her ist aber eine besondere Ausgestaltung des Zapfenelementes ebenso möglich. Der Erfindungsgedanke läßt sich auch ohne weiteres auf Integralverbinder übertragen.

Die konstruktive Ausbildung des Muffenelementes ist so gestaltet, dass in Verschraubposition eine axiale Verspannung innerhalb des Gewindes erreicht wird. Dazu weist vorzugsweise das Muffenelement mehr als zwei Abschnitte mit einer innerhalb des Abschnittes konstanten, aber zum Zapfenelement unterschiedlichen Steigung auf, wobei die Steigung mindestens eines Abschnittes entgegengesetzt gerichtet ist zu den übrigen Abschnitten und ein Abschnitt einen mindestens doppelten Steigungsunterschied aufweist im Vergleich zu den angrenzenden Abschnitten. Dadurch wird erreicht, dass in Verschraubposition im Abschnitt mit dem hohen Steigungsunterschied das Gewindespiel und die Gewindetoleranzen kompensiert werden und die Lastflanke eines Eckzahnes dieses Abschnittes mit der Führungsflanke des anderen Eckzahnes die Basisverspannung erzeugt. Die beiden benachbarten Abschnitte bauen mit ihren Last- bzw. Führungsflanken die Gewindeverspannung bis zum Erreichen des gewünschten Gewinde-Drehmomentes auf.

Als besonders günstig hat sich herausgestellt, wenn das Muffenelement vier Abschnitte aufweist, wovon ein Abschnitt eine gegenüber dem damit verschraubten Zapfenelement geringere und die drei aufeinanderfolgenden Abschnitte eine größere Steigung aufweisen, wobei die Steigung des Zapfenelementes als Bezugssteigung gilt. Diese zuvor beschriebene Anordnung gilt generell sowohl für die Anordnung eines Innen- und / oder Außenstoßes. Durch den Abschnitt mit geringerer Steigung wird das Lastflankenspiel zum Gewindeende hin aufgehoben bzw. stark reduziert.

Erfindungsgemäß ist auch der Grad der Erstreckung der einzelnen Abschnitte von Bedeutung. Optimale Werte werden dann erreicht, wenn der Abschnitt mit mindestens einem doppelten Steigungsunterschied sich mindestens über drei, vorzugsweise über vier Gänge und die beiden daran angrenzenden Abschnitte über zwei oder mehr Gänge erstrecken. Der im Auslaufbereich liegende Abschnitt erstreckt sich mindestens über drei Gänge.

Das Gewinde kann kegelig oder beliebig geneigt ausgeführt werden. Die Zahnform selbst ist von untergeordneter Bedeutung. Durch die erfindungsgemäße Konstruktion der Gewindeverbindung wird der gewünschte Effekt der Verspannung und der damit einhergehenden Verteilung der Belastung auf mehrere Gewindegänge auch unter Berücksichtigung der Toleranzen bei der Gewindeherstellung erreicht.

In der Zeichnung wird anhand eines Ausführungsbeispieles der erfindungsgemäß ausgebildete Rohrverbinder näher erläutert. Es zeigen:
- Figur 1: einen Längsschnitt durch einen Rohrverbinder mit Muffe
- Figur 2: einen Längsschnitt durch einen Rohrverbinder als Integralverbindung
- Figur 3: ein Diagramm mit Steigungsabschnitten und dazugehörigem Flankenspiel bzw. axialer Durchdringung, die sich aus der Überlagerung der Geometrie von Zapfen- und Muffengewinde ergibt.
- Figur 4: ein Diagramm der errechneten Verteilung der Zahnlasten über die Gewindelänge bei maximaler Steigungsänderung und kleinstem Lückenspiel und einem Stoßmoment gleich Null
- Figur 5: wie Figur 4 mit einem Stoßmoment gleich 50 % des maximalen Stoßmomentes
- Figur 6: wie Figur 5 mit einer zusätzlichen axialen Zuglast von 100 % der Rohrstreckgrenze
- Figur 7: wie Figur 5 mit einer zusätzlichen axialen Kompression von 90 % der Rohrstreckgrenze

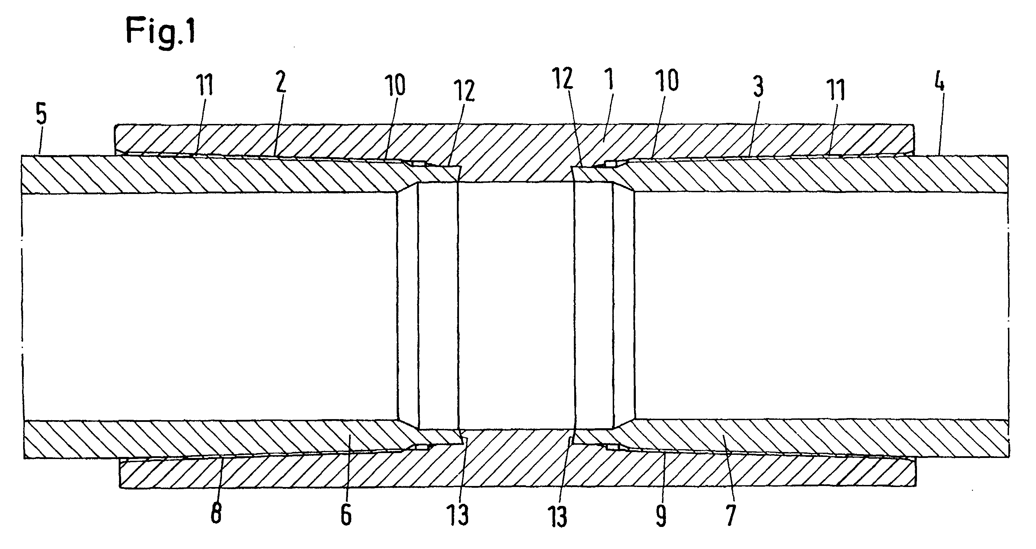

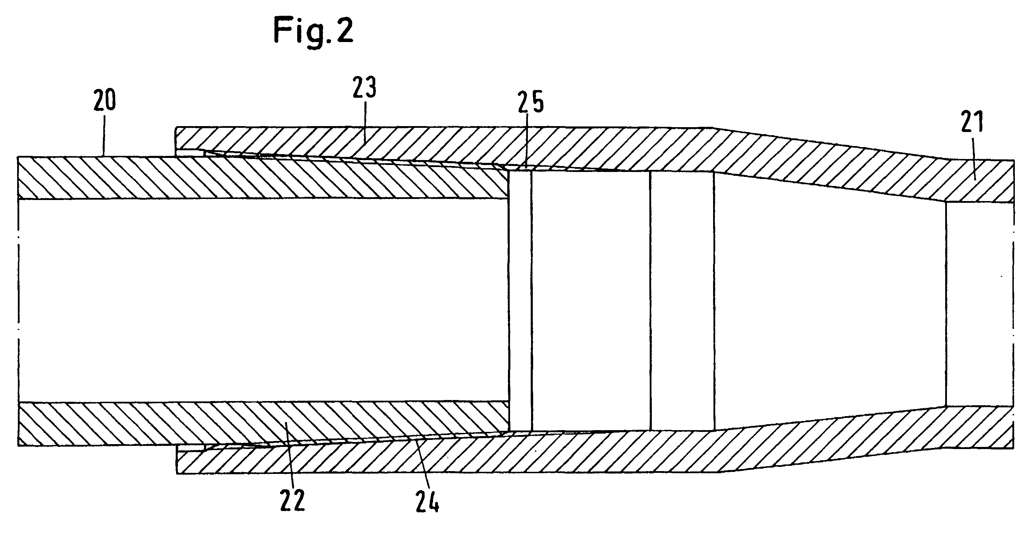

In den Figuren 1 und 2 sind in einem Längsschnitt Rohrverbinder dargestellt, und zwar in Figur 1 mit einer Muffe und in Figur 2 als Integralverbindung. Der erstgenannte Rohrverbinder besteht aus einer Muffe 1, die mit zwei konisch ausgebildeten Gewindeabschnitten 2, 3 versehen und im mittleren Bereich beidseitig je einen Dichtsitz 12 und einen Stoß 13 aufweist. Auf die Darstellung der Einzelheiten von Dichtsitz und Stoß wird hier verzichtet, da diese nicht erfindungswesentlich sind. Die beiden zu verbindenden Rohre 4, 5 sind im Endbereich als Zapfenelement 6, 7 ausgebildet und weisen komplementär zum Gewinde der Muffe 1 ebenfalls konisch ausgebildete Gewindeabschnitte 8, 9 auf. Die Ziffer 10 markiert das zapfenstimseitige Gewindeende, die Ziffer 11 das muffenstirnseitige Ende. Im Unterschied zu Figur 1 entfällt bei der in Figur 2 dargestellten Integralverbindung die Muffe. Die beiden zu verbindenden Rohre 20, 21 sind in ihren Endbereichen zum einen als Zapfenelement 22 und zum anderen als Muffenelement 23 ausgebildet. Die beiden Elemente 22, 23 weisen je einen komplementär zueinander konisch ausgebildeten Gewindeabschnitt 24, 25 auf. Auf die Darstellung von Stoß und Dichtsitz ist verzichtet worden.

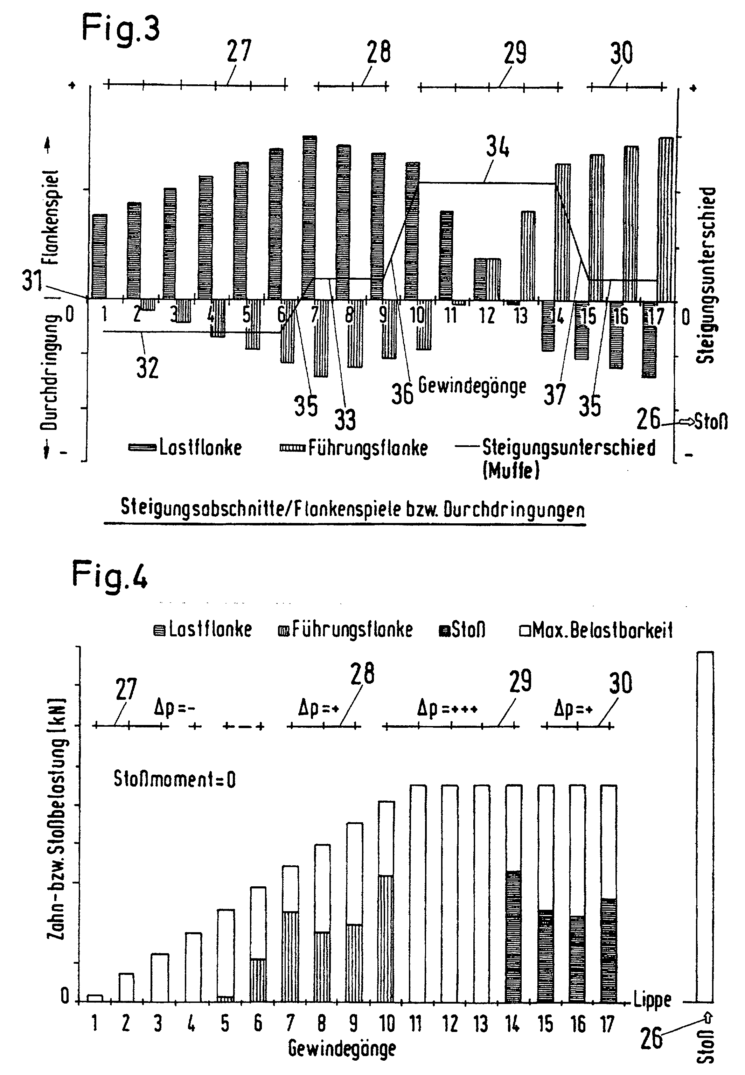

In Figur 3 sind beispielhaft für eine Ausführungsform in einem Diagramm die erfindungsgemäß ausgebildeten Abschnitte mit unterschiedlicher Steigung, der Steigungsverlauf in der Muffe sowie das dazugehörige Flankenspiel (+) bzw. die axiale Durchdringung (-), die sich aus der Überlagerung von Zapfen- und Muffengewinde ergibt, dargestellt. Für dieses gewählte Beispiel mit einer Gesamtgewindelänge von siebzehn Gewindegängen ist das Lastflanken- und das Führungsflankenspiel bzw. die axiale Durchdringung für die einzelnen Gewindegänge aufgetragen. Dabei kennzeichnen die dunkel schraffierten Flächen die Lastflanke und die heller schraffierten Flächen die Führungsflanke, wobei im positiven Bereich der Ordinate das Flankenspiel und im negativen Bereich die axiale Durchdringung abgetragen ist. Im Kopfbereich des Diagramms sind die erfindungsgemäß ausgebildeten Abschnitte einzeln aufgeführt. Es beginnt auf der linken Seite, d. h. auf der dem Stoß 26 abgewandten Seite mit einem ersten Abschnitt 27, der sich insgesamt über sechs Gewindegänge erstreckt. Daran schließt sich ein zweiter Abschnitt 28 mit einer Erstreckung von drei Gewindegängen an. Es folgt ein dritter Abschnitt 29 mit einer Erstreckung von fünf Gewindegängen und ein vierter und letzter Abschnitt 30 mit einer Erstreckung von drei Gewindegängen. Danach folgt im Regelfall ein kurzer gewindefreier Abschnitt (siehe hierzu auch Figur 1), an den sich der metallische Dichtsitz (Stoß 26) anschließt. Die dick ausgezogene Linie kennzeichnet für die Muffe den Steigungsunterschied in den einzelnen Abschnitten 27 - 30 in bezug auf das Zapfengewinde, das eine über die gesamte Gewindelänge konstante Steigung aufweist, hier repräsentiert durch die Null-Linie 31. Im ersten Abschnitt 27 ist die Steigung geringer als die im Zapfengewinde, hier kenntlich gemacht durch eine Linie 32, die unterhalb der Null-Linie 31 liegt. Im folgenden zweiten Abschnitt 28 ist die Steigung größer als im Zapfengewinde. Die entsprechende Linie 33 liegt oberhalb der Null-Linie 31. Im Unterschied zum bekannten Stand der Technik folgt im dritten Abschnitt 29 kein Wechsel in den Negativbereich, sondern ein Sprung zu einem noch höheren Steigungsunterschied in bezug auf das Zapfengewinde. Durch das Niveau der Linie 34 wird dies deutlich gemacht. Im vierten Abschnitt 30 folgt ein Abfall wieder auf den Ausgangswert des zweiten Abschnittes 28. Diese Linie 35 liegt ebenfalls oberhalb der Null-Linie 31, was bedeutet, dass die Steigung größer ist als im Zapfengewinde. Die Übergänge zwischen den einzelnen Abschnitten 27 - 30 sind theoretisch rechteckig, die Fertigung lässt aber einen solchen sprunghaften Wechsel von einer Steigung zu einem anderen Wert nicht zu, so dass sich ein fließender Übergang ergibt. Aus diesem Grunde sind die Übergänge 35 - 37 in Form von Schrägen dargestellt. Betrachtet man den Verlauf des Lastflanken- und Führungsflankenspiels bzw. der axialen Durchdringung, dann erkennt man, dass im Übergang zwischen dem ersten 27 und zweiten Abschnitt 28 die Werte einem Maximalwert zustreben, um in der Mitte des dritten Abschnittes 29 ein Minimum zu erreichen. Es erfolgt dann ein Wechsel von Lastflanken- und Führungsflankenspiel bzw. axialer Durchdringung, was das Vorzeichen betrifft und die Werte steigen in Richtung Stoß 26 wieder an.

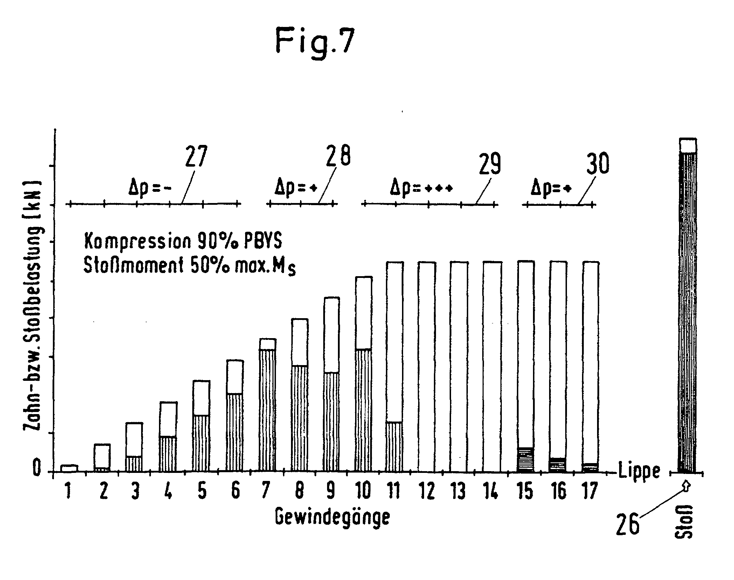

Berücksichtigt man die Verformungen, die beim Verschrauben im wesentlichen aus dem Ausgleich der axialen Durchdringung herrühren, dann ergeben sich entsprechende Zahnbelastungen an den Zahnflanken. Dazu sind in den folgenden Figuren 4 - 7 für ein gewähltes Beispiel die jeweilige Verteilung der Zahnlasten über die Gewindelänge bei maximalem Steigungsunterschied und kleinstem Lückenspiel sowie die Stoßbelastung in Abhängigkeit von Stoßmoment, zusätzlicher axialer Zuglast und zusätzlicher axialer Kompression dargestellt.

Dabei stellen die blanken Säulen die maximale Belastbarkeit für den jeweiligen Zahn im vollständigen und auslaufenden Gewinde bzw. für den Stoß, die dunkel schraffierten Flächen die Belastung der Lastflanke und die hell schraffierten Flächen die Belastung der Führungsflanke dar. Die jeweilige Stoßbelastung ist voll ausgemalt. Im Kopfbereich des Diagramms sind für die einzelnen Abschnitte 27 - 30 die Steigungsunterschiede angegeben. Dabei ist zu beachten, dass der Steigungsunterschied zwischen dem ersten 27 und zweiten Abschnitt 28 etwa gleich groß ist, aber entgegengesetzt gerichtet ist. Der dritte Abschnitt 29 weist ein gegenüber den beiden benachbarten Abschnitten 28, 30 einen um das Mehrfache größeren Steigungsunterschied auf. Für das erste Teilbild gemäß Figur 4 ist angenommen, dass das Stoßmoment Null sein soll und keine zusätzlichen Zuglasten oder Kompression das Gewinde belasten. Im Ergebnis sind die Zähne der letzten Gewindegänge (14 - 17) bezüglich der Lastflanken etwa gleich hoch belastet. Die Zähne der ersten Gewindegänge (1 - 6) am Gewindeauslauf sind nicht bzw. wenig belastet, ebenso die drei Gewindegänge (11 - 13) im dritten Abschnitt 29.

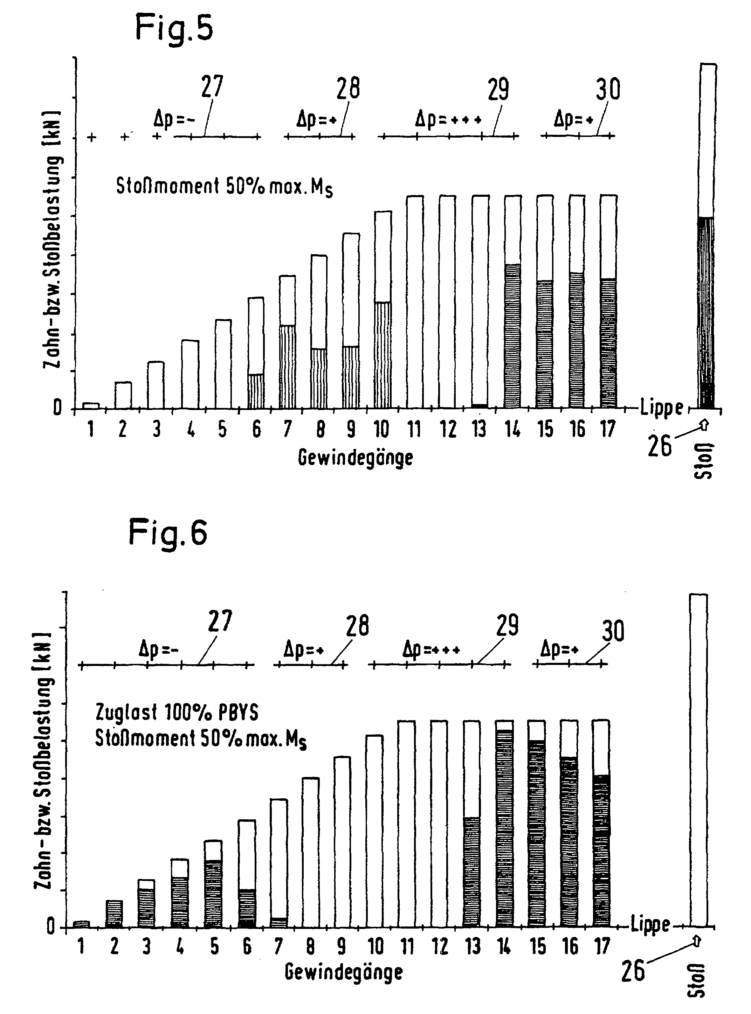

In Figur 5 ändert sich das Bild nur unwesentlich, wenn am Stoß 26 in diesem Beispiel ein Stoßmoment von 50 % des Maximalwertes anliegt. Die Zähne der letzten Gewindegänge (14 - 17) werden etwas höher belastet im Vergleich zur Belastungssituation in Figur 4. An der Gesamtverteilung ändert sich nur wenig.

Ganz anders werden die Verhältnisse, wenn, wie in Figur 6 dargestellt, dem Stoßmoment von 50 % des Maximalwertes eine axiale Zuglast in Höhe der Rohrstreckgrenzen-Last (100 % PBYS = Pipe Body Yield Strength) überlagert wird. Dabei wird, wie in diesem Beispiel zu erkennen ist, die Stoßkraft aufgehoben, obwohl ein Stoßmoment von 50% des Maximalwertes anliegt. in diesem Falle sind die Zähne der letzten Gewindegänge (14 - 17) hoch belastet und auch der im dritten Abschnitt 29 liegende Gang (13) trägt mit zur Verteilung der Gesamtbelastung bei. Auch die Zähne der ersten Gewindegänge (1 - 6) sind teilweise bis an die Grenze belastet. Die errechnete Zuglast soll dabei 100 % PBYS entsprechen (Pipe Body Yield Strength). Dies bedeutet, dass bei überlagerter axialer Zuglast, entsprechend der Streckgrenze des Rohrkörpers, die Zahnbelastungen innerhalb der zulässigen Belastungsbereiche liegen.

Bild 7 zeigt die Verteilung bei Aufgabe einer zusätzlichen axialen Kompression (Druckbelastung). Dabei ist angenommen, dass die in diesem Bereich vorgegebene Kompression 90 % der Streckgrenze des Rohrkörpers entspricht. Während gemäß Figur 6 bei Axialzugbelastung der Stoß 26 entlastet wird, wird bei Kompression der Stoß 26 fast bis an die zulässige Grenze beaufschlagt. Die Zähne der letzten Gewindegänge (14 - 17) werden ebenfalls entlastet, während die Zähne der ersten Gewindegänge (1 - 6) sowie des zweiten Abschnittes 28 und der Anfangsbereich des dritten Abschnittes 29 stärker belastet werden. Insgesamt bleiben auch in diesem Belastungsfall die Zahnbelastungen innerhalb des zulässigen Bereiches.

## Patentansprüche

1. Rohrverbinder mit einem Muffenelement, das ein Innengewinde und mit einem Zapfenelement, das ein damit verschraubbares Außengewinde aufweist, wobei ein Element eine durchgehend konstante Steigung aufweist und das andere Element mit zwei jeweils von den Enden der Gewindelänge sich erstreckenden Abschnitten ebenfalls mit einer konstanten Steigung versehen sind, die aber unterschiedlich zur Steigung des erstgenannten Elementes ist und sich außen an die Gewindeabschnitte ein gewindefreier Abschnitt anschließen kann, der ggf. als metallischer Dichtsitz ausgebildet ist,
**dadurch gekennzeichnet,**
**dass** das andere Element (1) mehr als zwei Abschnitte (27-30) mit einer innerhalb jedes Abschnittes (27-30) konstanten, aber zum erstgenannten Element (6,7) unterschiedlichen Steigung aufweist, wobei der Steigungsunterschied mindestens eines Abschnittes (27) im Hinblick auf das Vorzeichen entgegengesetzt gerichtet ist zu den übrigen Abschnitten (28-30) und ein Abschnitt (29) einen mindestens doppelten Steigungsunterschied aufweist im Vergleich zu den angrenzenden Abschnitten (28,30) und in Verschraubposition im Abschnitt mit dem hohen Steigungsunterschied das Gewindespiel und die Gewindetoleranzen kompensiert werden und die Lastflanke eines Eckzahnes dieses Abschnittes (29) mit der Führungsflanke des anderen Eckzahnes eine Basisverspannung erzeugt und die beiden benachbarten Abschnitte (28,30) mit ihren Last- bzw. Führungsflanken eine Gewindeverspannung bis zum Erreichen eines gewünschten Gewinde-Drehmomentes aufbauen.

2. Rohrverbinder nach Anspruch 1,
**dadurch gekennzeichnet,**
**dass** das Zapfen- (6,7) oder Muffenelement (1) eine durchgehend konstante Steigung und das jeweils andere Element vier Abschnitte (27-30) mit einer davon unterschiedlichen Steigung aufweist, wovon die Steigung eines Abschnittes (27) im Hinblick auf das Vorzeichen entgegengesetzt gerichtet ist zu den übrigen drei aufeinanderfolgenden Abschnitten (28-30) und der mittlere (29) der drei aufeinanderfolgenden Abschnitte einen mindestens zweifachen Steigungsunterschied aufweist im Vergleich zu den benachbarten Abschnitten (28,30).

3. Rohrverbinder nach Anspruch 2,
**dadurch gekennzeichnet,**
**dass** ein Abschnitt (27) eine geringere und die drei aufeinanderfolgenden Abschnitte (28-30) eine größere Steigung aufweisen als das damit verschraubte Element (6,7).

4. Rohrverbinder nach Anspruch 2,
**dadurch gekennzeichnet,**
**dass** ein Abschnitt eine größere und die drei aufeinanderfolgenden Abschnitte eine kleinere Steigung aufweisen als das damit verschraubte Element.

5. Rohrverbinder nach einem der Ansprüche 1 - 4,
**dadurch gekennzeichnet,**
**dass** das Maß des Steigungsunterschiedes der zwei aufeinanderfolgenden Abschnitte (27,28) mit jeweils einer im Hinblick auf das Vorzeichen entgegengesetzt gerichteten Steigung nahezu gleich groß ist.

6. Rohrverbinder nach einem der Ansprüche 1 - 5,
**dadurch gekennzeichnet,**
**dass** der Abschnitt (29) mit einem mindestens doppelten Steigungsunterschied im Vergleich zu den angrenzenden Abschnitten (28,30) sich mindestens über drei, vorzugsweise über vier Gänge erstreckt und die beiden daran angrenzenden Abschnitte (28,30) sich über zwei oder mehr Gänge erstrecken.

7. Rohrverbinder nach einem der Ansprüche 1 - 6,
**dadurch gekennzeichnet,**
**dass** bei Anordnung eines metallischen Dichtsitzes auf der Innen- und / oder Außenseite der Gewindeverbindung der auf der Auslaufseite sich befindende Abschnitt eine geringere Steigung und die drei aufeinanderfolgenden Abschnitte eine größere Steigung aufweisen als das damit verschraubte Element und der erstgenannte Abschnitt sich über mindestens drei Gänge erstreckt.

8. Rohrverbinder nach einem der Ansprüche 1 - 7,
**dadurch gekennzeichnet,**
**dass** Zapfen- und Muffengewinde mehrgängig, vorzugsweise zweigängig ausgeführt sind.

9. Rohrverbinder nach einem der Ansprüche 1 - 8,
**dadurch gekennzeichnet,**
**dass** der Steigungsunterschied zwischen den beiden verschraubten Elementen mindestens 0,005 mm / Zoll und maximal 0,4 mm */* Zoll beträgt.

## Claims

1. Pipe connector with a bell element having an internal thread and with a spigot element having an external thread, which can be screwed to the internal thread, wherein one element has a pitch which is constant throughout and the other element is provided with two portions, each extending from the ends of the thread length, likewise with a constant pitch, which, however, is different to the pitch of the first-mentioned element, and an unthreaded portion can externally adjoin the threaded portions, which portion is optionally formed as a metallic sealing seat,
**characterised in**
**that** the other element (1) has more than two portions (27-30) with a pitch which is constant within each portion (27-30), yet different to the first-mentioned element (6, 7), wherein the pitch difference of at least one portion (27), with respect to the sign, is opposite to the other portions (28-30), and one portion (29) has an at least double pitch difference in comparison with the adjacent portions (28, 30), and in the screwed-up position the thread play and the thread tolerances are compensated in the portion with the high pitch difference, the load flank of one corner tooth of this portion (29) produces a base stress with the guide flank of the other corner tooth, and the two adjoining portions (28, 30) build up a thread stress with their load and guide flanks until a desired thread torque is reached.

2. Pipe connector according to Claim 1,
**characterised in**
**that** the spigot (6, 7) or bell element (1) has a pitch which is constant throughout, and the respective other element has four portions (27-30) with a pitch which is different thereto, the pitch of one portion (27), with respect to the sign, being opposite to the other three consecutive portions (28-30), and the middle (29) of the three consecutive portions having an at least double pitch difference in comparison with the adjoining portions (28, 30).

3. Pipe connector according to Claim 2,
**characterised in**
**that** one portion (27) has a smaller and the three consecutive portions (28-30) have a greater pitch than the element (6, 7) screwed thereto.

4. Pipe connector according to Claim 2,
**characterised in**
**that** one portion has a greater and the three consecutive portions have a smaller pitch than the element screwed thereto.

5. Pipe connector according to any one of Claims 1 - 4,
**characterised in**
**that** the extent of the pitch difference of the two consecutive portions (27, 28) with a pitch which is opposite with respect to the sign is almost of the same magnitude.

6. Pipe connector according to any one of Claims 1 - 5,
**characterised in**
**that** the portion (29) with an at least double pitch difference in comparison with the adjacent portions (28, 30) extends at least over three, preferably over four starts, and the two portions (28, 30) adjacent thereto extend over two or more starts.

7. Pipe connector according to any one of Claims 1 - 6,
**characterised in**
**that**, with a metallic sealing seat arranged on the inside and/or outside of the threaded connection, the portion located on the runout side has a smaller pitch and the three consecutive portions have a greater pitch than the element screwed thereto, and the first-mentioned portion extends over at least three starts.

8. Pipe connector according to any one of Claims 1 - 7,
**characterised in**
**that** the spigot and bell threads are of multi-start construction, preferably two-start construction.

9. Pipe connector according to any one of Claims 1 - 8,
**characterised in**
**that** the pitch difference between the two screwed-up elements is at least 0.005 mm/inch and a maximum of 0.4 mm/inch.

## Revendications

1. Liaison pour tube, comportant un élément de manchon, qui présente un filetage interne, et un élément de tourillon, qui présente un filetage externe pouvant être vissé à celui-ci, un élément présentant une pente continuellement constante et l'autre élément à deux tronçons s'étendant à chaque fois des extrémités de la longueur filetée, présentant de même une pente constante, qui est cependant différente par rapport à la pente du premier élément cité et un tronçon sans filetage pouvant se raccorder extérieurement aux tronçons filetés, lequel est réalisé le cas échéant comme siège d'étanchéité métallique,
**caractérisée en ce que** l'autre élément (1) présente plus de deux tronçons (27 - 30) ayant une pente constante à l'intérieur de chaque tronçon (27-30), mais différente par rapport au premier élément cité (6, 7), la différence de pente d'au moins un tronçon (27), en considération du signe, étant opposée par rapport aux tronçons restants (28 - 30) et un tronçon (29) présentant une différence de pente au moins double par rapport aux tronçons adjacents (28, 30) et, dans la position de vissage, dans le tronçon ayant la différence de pente élevée, le jeu de filetage et les tolérances de filetage étant compensés, et le flanc de charge d'une dent de ce tronçon (29) engendrant avec le flanc de guidage de l'autre dent une contrainte de base, et les deux tronçons voisins (28, 30), avec leurs flancs de charge et de guidage, créant une contrainte de filetage jusqu'à atteindre un couple de filetage souhaité.

2. Liaison pour tube selon la revendication 1,
**caractérisée en ce que** l'élément de manchon (1) ou l'élément de tourillon (6, 7) présente une pente continuellement constante et l'autre élément respectif de quatre tronçons (27 - 30) présente une pente différente de celle-ci, la pente d'un tronçon (27) étant orientée, en considération du signe, de façon opposée aux trois autres tronçons successifs (28 - 30) et le tronçon médian (29) des trois tronçons successifs présentant une différence de pente au moins double par rapport aux tronçons voisins (28, 30).

3. Liaison pour tube selon la revendication 1,
**caractérisée en ce qu'**un tronçon (27) présente une pente plus faible et les trois tronçons successifs (28 - 30) présentent une pente plus forte que l'élément qui y est vissé (6, 7).

4. Liaison pour tube selon la revendication 2,
**caractérisée en ce qu'**un tronçon présente une plus grande pente et les trois tronçons successifs présentent une pente plus faible que l'élément qui y est vissé.

5. Liaison pour tube selon une des revendications 1 - 4,
**caractérisée en ce que** la mesure de la différence de pente des deux tronçons successifs (27, 28) est pratiquement identique à, à chaque fois, une pente opposée en considération du signe.

6. Liaison pour tube selon une des revendications 1 - 5,
**caractérisée en ce que** le tronçon (29) avec une différence de pente au moins double par rapport aux tronçons adjacents (28, 30) s'étend au moins sur trois, avantageusement sur quatre spires et les deux tronçons adjacents à celui-ci (28, 30) s'étendent sur deux ou plus spires.

7. Liaison pour tube selon une des revendications 1 - 6,
**caractérisée en ce que**, lors de l'agencement d'un siège d'étanchéité métallique sur la face interne et/ou la face externe de la liaison filetée, le tronçon se trouvant sur le côté de sortie présente une pente plus faible et les trois tronçons successifs présentent une plus grande pente que l'élément qui y est vissé, et le premier tronçon cité s'étend sur au moins trois spires.

8. Liaison pour tube selon une des revendications 1 - 7,
**caractérisée en ce que** le filetage du manchon et le filetage du tourillon sont réalisés en ayant plusieurs filets, avantageusement deux filets.

9. Liaison pour tube selon une des revendications 1 - 8,
**caractérisée en ce que** la différence de pente entre les deux éléments vissés vaut au moins 0,005 mm/pouce et au maximum 0,4 mm/pouce.
